# EUROPÄISCHE PATENTANMELDUNG

(11) **EP 2 193 949 A2**
(43) Veröffentlichungstag der Anmeldung: **09.06.2010**
(21) Anmeldenummer: 09177035.4
(22) Anmeldetag: 25.11.2009
(51) Int. Cl.: B60K 15/03

(54) **Kraftstofftank aus Metall und Verfahren zu dessen Herstellung**

(30) Priorität: 27.11.2008 DE 102008037602
(71) Anmelder: Hydro Aluminium Deutschland GmbH, 53117 Bonn (DE)
(72) Erfinder: Schröder, Dietmar, 41515, Grevenbroich (DE)
(74) Vertreter: Cohausz & Florack

(57) **Zusammenfassung**

Die Erfindung betrifft einen Kraftstofftank (2) aus Metall mit einem Kraftstoffaufnahmevolumen (8), welcher aus einem wenigstens zweilagigen Verbundwerkstoff gebildet ist. Der Erfindung liegt die Aufgabe zu Grunde, einen Kraftstofftank anzugeben, welcher die Verwendung kostengünstiger Werkstoffe ermöglicht und bei geringem Gewicht dennoch eine hohe Widerstandsfähigkeit gegen Korrosion aufweist. Gelöst wird die Aufgabe dadurch, dass ein leichtmetallbasiertes, insbesondere aluminiumbasiertes Trägermaterial auf wenigstens der dem Kraftstoffaufnahmevolumen (8) zugewandten Seite eine Lage eines korrosionsresistenten Aluminiumwerkstoffes aufweist. Die Erfindung betrifft weiterhin ein Verfahren zur Herstellung eines ein Kraftstoffaufnahmevolumen (8) aufweisenden Kraftstofftanks (2) aus Metall.

## Beschreibung

Die Erfindung betrifft einen Kraftstofftank aus Metall mit einem Kraftstoffaufnahmevolumen, welcher aus einem wenigstens zweilagigen Verbundwerkstoff gebildet ist. Weiterhin betrifft die Erfindung ein Verfahren zur Herstellung eines ein Kraftstoffaufnahmevolumen aufweisenden Kraftstofftanks aus Metall.

Auf Grund der ausgeprägten Konkurrenzsituation im Kraftfahrzeugbau sind die Hersteller von Kraftfahrzeugen bzw. deren Zubehörteilen bestrebt, Kosteneinsparpotenziale aufzufinden und in der Fertigung umzusetzen. Derartige Kosteneinsparpotenziale können sich beispielsweise aus der Verwendung kostengünstiger Werkstoffe ergeben. Allerdings können die Werkstoffe nicht allein nach ihrem Preis ausgewählt werden, da die aus ihnen gefertigten Zubehörteile für die beabsichtigte Verwendung tauglich sein müssen. Durch den aus ökologischen Gründen verstärkten Einsatz von Biodieseln beispielsweise ergeben sich neue Anforderungen für die Teile im Kraftfahrzeug, insbesondere Kraftstofftanks oder Kraftstoffleitungen, welche mit dem Biodiesel in Kontakt kommen. Biodiesel wirkt beispielsweise als Lösungsmittel und kann Weichmacher aus daran nicht angepassten Kunststoffdichtungen und -schläuchen herauslösen, wodurch diese spröde und brüchig werden und schließlich zur Leckage führen können. Ferner weist Biodiesel eine gute Wasserlöslichkeit auf, wodurch insbesondere in metallischen Tanks bzw. an metallischen Zubehörteilen die Korrosionsgefahr erhöht wird. Um den ökologischen Nutzen durch den verstärkten Gebrauch von Biodieseln zu erhöhen oder zumindest nicht zu mindern, wird gleichzeitig ein geringes Gewicht des metallischen Tanks bzw. der metallischen Zubehörteile angestrebt.

Der vorliegenden Erfindung liegt daher die Aufgabe zu Grunde, einen Kraftstofftank anzugeben, welcher die Verwendung kostengünstiger Werkstoffe ermöglicht und bei geringem Gewicht dennoch eine hohe Widerstandsfähigkeit gegen Korrosion aufweist. Weiterhin liegt der Erfindung die Aufgabe zu Grunde, ein Verfahren zur Herstellung des Kraftstofftanks anzugeben.

Gemäß einer ersten Lehre der vorliegenden Erfindung wird die Aufgabe für einen gattungsgemäßen Kraftstofftank dadurch gelöst, dass der Verbundwerkstoff des Kraftstofftanks ein leichtmetallbasiertes, insbesondere aluminiumbasiertes Trägermaterial aufweist, welches auf wenigstens der dem Kraftstoffaufnahmevolumen zugewandten Seite eine Lage eines korrosionsresistenten Aluminiumwerkstoffs aufweist.

Erfindungsgemäß muss das Trägermaterial, welches lediglich einen Beitrag zu der Formgebung und Festigkeit des Kraftstofftanks leisten muss und daher im Wesentlichen durch ein beliebiges leichtmetallbasiertes, insbesondere aluminiumbasiertes, Material gebildet werden kann, nicht korrosionsbeständig sein, denn es wird erfindungsgemäß durch die die Lage aus einem korrosionsresistenten Aluminiumwerkstoff für eine Anwendung in einer aggressiven, insbesondere korrosiven Umgebung im Inneren des Kraftstofftanks tauglich gemacht. Auf diese Weise lassen sich vorteilhafte Eigenschaften des Trägermaterials, beispielsweise geringes Gewicht und geringe Kosten, und die notwendige Widerstandsfähigkeit des korrosionsresistenten Aluminiumwerkstoffs miteinander verbinden.

Unter leichtmetallbasierten Materialien werden dabei Metallhalbzeuge verstanden, deren Hauptelement ein Leichtmetall, z.B. Aluminium oder Magnesium, ist. Insbesondere Aluminium beispielsweise Reinaluminium oder Aluminiumlegierungen kommen für die Herstellung des Trägermaterials in Frage und stehen beispielsweise als Bänder oder Bleche kostengünstig zur Verfügung.

Der korrosionsresistente Aluminiumwerkstoff ist vorteilhafter Weise dem Kraftstoffaufnahmevolumen zugewandt, um insbesondere die von dem Kraftstoff ausgehenden Korrosionsangriffe abzuwehren.

Zweckmäßigerweise werden das Trägermaterial und der korrosionsresistente Aluminiumwerkstoff, welche beispielsweise in Form von Blechzuschnitten und/oder Folien vorliegen, mittels der Plattiertechnik gefügt. Auf diese Weise kann eine stabile, keine Schwachstellen aufweisende flächige Verbindung zwischen dem Trägermaterial und dem korrosionsresistenten Werkstoff auf wirtschaftliche Weise erzielt werden.

In einer vorteilhaften Ausgestaltung der Erfindung kann die Lage eines korrosionsresistenten Aluminiumwerkstoffes mittels Walzplattieren oder Walzschweißplattieren mit dem Trägermaterial verbunden sein. Bleche beider Materialien werden hierzu aufeinander gelegt und miteinander durch Warmwalzen verschweißt. Auf diese Weise lassen sich besonders wirkungsvoll unlösbare Verbindungen zwischen dem Trägermaterial und dem korrosionsresistenten Aluminiumwerkstoff wirtschaftlich erzeugen. Den Anforderungen, gegenüber welchen der Kraftstofftank im Kraftfahrzeug während des Betriebs zu bestehen hat, kann so entsprochen werden.

Weiterhin kann es vorteilhaft sein, das Trägermaterial beidseitig mit einer Lage aus einem korrosionsresistenten Aluminiumwerkstoff zu plattieren. Auf diese Weise kann ein bezüglich des Aufbaus dreilagiger Verbundwerkstoff hergestellt werden. Das Trägermaterial ist dann beidseitig mit einem korrosionsresistenten Werkstoff bedeckt und lässt sich so flexibler einsetzen. Insbesondere kann auf diese Weise auch die nicht dem Kraftstoffaufnahmevolumen zugewandte Seite vor einem Korrosionsangriff durch beispielsweise beim Tanken überlaufenden Kraftstoff geschützt werden. Die beiden Plattierlagen können voneinander abweichende Dicken aufweisen. Ebenso ist es möglich, die beiden Plattierlagen aus voneinander abweichenden korrosionsresistenten Werkstoffen zu bilden. Der Kraftstofftank kann somit sehr flexibel auf die während des Betriebs zu erwartenden Belastungen ausgelegt werden.

In einer nächsten Ausgestaltung kann der Kraftstofftank auch aus einem zweilagigen Verbundwerkstoff gebildet sein, bei dem der Verbundwerkstoff durch simultanes Gießen mit mindestens einer ein- oder beidseitig angeordneten Lage eines korrosionsresistenten Aluminiumwerkstoffes hergestellt ist. Das simultane Gießen der Lage eines korrosionsresistenten Aluminiumwerkstoffes mit dem leichtmetallbasierten, insbesondere aluminiumbasierten, Trägermaterial führt zur Reduzierung der Arbeitsschritte zur Herstellung des Verbundwerkstoffes und stellt eine Alternative zum Walzplattieren dar.

Das Trägermaterial kann auch beidseitig durch simultanes Gießen mit einer Lage eines korrosionsresistenten Aluminiumwerkstoffes verbunden sein, so dass sich auch bei der Verwendung des simultanen Gießens der Verbundwerkstoff flexibel einsetzen lässt.

Sofern Kraftstofftanks hergestellt werden sollen, die aus Verbundwerkstoffen gebildet sind, die mehr als zwei Lagen aufweisen, ist auch denkbar, simultanes Gießen und Plattieren auch in Kombination anzuwenden.

Der korrosionsresistente Aluminiumwerkstoff ist gemäß einer weiteren Ausführungsform des erfindungsgemäßen Kraftstofftanks insbesondere gegenüber aus mit Methanol veresterten Pflanzenölen hergestellten Kraftstoffen, insbesondere Biodieseln, korrosionsbeständig. Auf diese Weise kann in vorteilhafter Weise auf die Entwicklung im Kraftfahrzeugbereich hinsichtlich der verstärkten Verwendung von Biodieseln reagiert werden.

Dadurch, dass die Kraftstofftanks gemäß der vorliegenden Erfindung gegenüber den von Biodieseln ausgehenden Korrosionsangriffen weitgehend resistent sind, eröffnen sich vielfältige Einsatzmöglichkeiten. So sind die Kraftstofftanks gemäß der vorliegenden Erfindung dafür geeignet, reinen Biodiesel oder auch beliebige Mischungen aus fossilen Kraftstoffen und Biodieseln aufzunehmen, ohne dass sich daraus signifikante Änderungen in ihrer Maximal-Betriebsdauer ergeben.

Als korrosionsresistente Aluminiumwerkstoffe können Reinaluminium, d.h. Aluminium ohne Legierungszusätze mit einem Aluminiumanteil von mehr als 99,0 Gew.-%, insbesondere Aluminiumwerkstoffe des Typs A199,5, oder auch AlMg1-Aluminiumlegierungen verwendet werden. Die Aluminiumlegierung des Typs A199,5 beispielsweise weist neben der hohen Korrosionsbeständigkeit auch eine gute Schweißbarkeit und eine hohe elektrische Leitfähigkeit auf, was insbesondere für das Fügeverhalten günstig sein kann. Mit dem erhöhten Magnesiumgehalt in den AlMg1-Aluminiumlegierungen lässt sich eine erhöhte Festigkeit und damit eine verbesserte mechanische Beständigkeit erzielen, ohne dass die Korrosionsbeständigkeit negativ beeinflusst wird.

In einer weiteren vorteilhaften Ausgestaltung des Kraftstofftanks kann das Trägermaterial aus einem Recyclingwerkstoff, insbesondere Recyclingaluminium, gefertigt sein. Auf diese Weise lässt sich eine Kosteneinsparung durch die Verwendung eines Recyclingwerkstoffs erreichen. Wird Recyclingaluminium verwendet, kann neben der Kosteneinsparung auch eine Gewichtseinsparung durch die Verwendung eines Materials mit vergleichsweise geringer Dichte erreicht werden. Insbesondere in gewichtssensitiven Anwendungsbereichen wie dem Kraftfahrzeugbau können die Gewichtsvorteile von Aluminiumwerkstoffen im Vergleich zu beispielsweise Stahlwerkstoffen insbesondere einen geringeren Kraftstoffverbrauch und mithin eine höhere Umweltverträglichkeit hervorbringen.

Vorzugsweise ist der Verbundwerkstoff einseitig oder beidseitig glatt gewalzt. Auf diese Weise können insbesondere eine gleichmäßige Oberflächenanmutung und speziell auch eine verbesserte Optik des Kraftstofftanks erzielt werden. Darüber hinaus wird durch das Glattwalzen die Oberflächenrauigkeit reduziert, weshalb die glatte Oberfläche weniger anfällig gegenüber Korrosionsangriffen ist.

Der Verbundwerkstoff kann einseitig oder beidseitig einer chemischen oder elektrolytischen Glänzung unterzogen sein. Eine Glänzung dient insbesondere zum Ausgleich von Einlagerungen bzw. Verunreinigungen nicht polierbarer Materialien, Walzfehlern und gegebenenfalls mechanischen Beschädigungen in den Trägermaterialoberflächen bzw. den Oberflächen des korrosionsresistenten Aluminiumwerkstoffs. Darüber hinaus kann damit auch der optische Eindruck des Kraftstofftanks verbessert werden.

In einer weiteren vorteilhaften Ausgestaltung des Kraftstofftanks können das Trägermaterial und/oder die Lage aus einem korrosionsresistenten Aluminiumwerkstoff auf der der Verbindung zwischen Trägermaterial und korrosionsresistentem Aluminiumwerkstoff abgewandten Seite zumindest teilweise eloxiert sein. Mittels der Eloxierung kann die Dicke der korrosionshemmenden (natürlichen) Oxidschicht auf dem Aluminiumwerkstoff bzw. auf dem Trägermaterial erhöht werden. Die Korrosionsresistenz ist auf diese Weise weiter steigerbar.

Der erfindungsgemäße Kraftstofftank kann beispielsweise in einem Nutzfahrzeug eingesetzt wird. Nutzfahrzeuge erreichen über ihre Lebensdauer üblicherweise sehr hohe Laufleistungen, so dass selbst geringe Verbrauchsvorteile durch ein geringes Gewicht des Kraftstofftanks sich in Summe bemerkbar machen.

Bei einem Lastkraftwagen lässt sich zudem bei verringertem Gewicht des Kraftstofftankes die Nutzlast und somit die Praxistauglichkeit des Lastkraftwagens erhöhen.

Gemäß einer weiteren Lehre der vorliegenden Erfindung wird die Aufgabe auch mit einem Verfahren nach dem Oberbegriff des Patentanspruchs 9 dadurch gelöst, dass aus einem leichtmetallbasierten, insbesondere aluminiumbasierten, Trägermaterial und mindestens einer Lage eines korrosionsresistenten Aluminiumwerkstoffes ein wenigstens zweilagiger Verbundwerkstoff gebildet wird, bei welchem Bleche aus dem Verbundwerkstoff bereit gestellt werden und bei welchem die Bleche aus dem Verbundwerkstoff zu dem Kraftstofftank umgeformt und/oder umgeformte Blechteile des Verbundwerkstoffs zu dem Kraftstofftank zusammengefügt werden, wobei zumindest eine Lage aus dem korrosionsresistenten Aluminiumwerkstoff dem Kraftstoffaufnahmevolumen zugewandt ist.

Der Verbundwerkstoff kann bandförmig hergestellt werden, wobei ausgehend von einem Plattierbarren aus dem leichtmetallbasierten, insbesondere aluminiumbasierten, Trägermaterial eine Plattierschicht aus einem korrosionsresistenten Aluminiumwerkstoff durch Warmwalzen aufplattiert wird. Nach dem Plattieren des Trägermaterials mit dem korrosionsresistenten Aluminiumwerkstoff kann der so gefertigte Verbundwerkstoff zugeschnitten und beispielsweise mittels mehrerer Verfahrensschritte, beispielsweise durch Innenhochdruckumformen, zu dem Kraftfahrzeugtank umgeformt werden. Es ist ebenso möglich, verschiedene Blechzuschnitte des Verbundwerkstoffs umzuformen, und diese Formteile dann unter Verwendung verschiedener Fügetechniken, beispielsweise Schweißen, Löten und/oder Kleben, zu dem Kraftstofftank zusammenzufügen. Auch Kombinationen der vorgenannten Verfahren sind möglich. So können bereits gefügte Formteile noch einem Innenhochdruckumformen unterzogen werden, um die Formgebung des Kraftstofftanks abzuschließen. Zu beachten ist lediglich, dass eine Lage aus dem korrosionsresistenten Aluminiumwerkstoff dem Kraftstoffaufnahmevolumen im fertigen Kraftstofftank zugewandt ist.

In einer vorteilhaften Ausführungsform des Verfahrens können der korrosionsresistente Aluminiumwerkstoff und das Trägermaterial mittels Walzplattieren oder Walzschweißplattieren verbunden werden. Auf diese Weise wird eine stabile, unlösbare, flächige Verbindung zwischen den wenigstens zwei Materiallagen geschaffen.

Der Kraftstofftank kann allerdings auch aus einem Verbundwerkstoff gebildet werden, der unter Verwendung von simultanem Gießen erzeugt wird. Gegenüber dem Plattieren zeichnet sich das simultane Gießen durch eine reduzierte Anzahl an Arbeitsschritten und somit eine höhere Prozesssicherheit aus. Es stellt zudem ein alternatives Verfahren zum Walzplattieren dar. Gleichzeitig lässt sich mit dem simultanen Gießen eine auch hohen Dauerbelastungen standhaltende Verbindung der Lage des korrosionsresistenten Aluminiumwerkstoffes mit dem Trägermaterial erzielen.

Bevorzugter Weise wird das Trägermaterial beidseitig mit einer Lage eines korrosionsresistenten Aluminiumwerkstoffs versehen. Durch die entstehende Symmetrie wird ein sehr flexibler Verbundwerkstoff aus dem Trägermaterial und dem korrosionsresistenten Aluminiumwerkstoff erhalten. Insbesondere kann der Verbundwerkstoff auf die im Betrieb zu erwartenden Belastungen angepasst werden.

In einer weiteren vorteilhaften Ausführungsform des Verfahrens kann der Verbundwerkstoff einseitig oder beidseitig glatt gewalzt werden. Auf diese Weise lassen sich eine verbesserte Optik und/oder eine gleichmäßige Oberflächenanmutung erzielen. Durch die verringerte Oberfläche des glatt gewalzten Verbundwerkstoffs wird außerdem die Anfälligkeit für Korrosionsangriffe vermindert.

Der Verbundwerkstoff kann einseitig oder beidseitig einer chemischen oder elektrolytischen Glänzung unterzogen werden. Diese Behandlung ist insbesondere geeignet, um während des Herstellungsprozesses des Trägermaterials bzw. des korrosionsresistenten Aluminiumwerkstoffs auftretende Inhomogenitäten zu beseitigen und somit eine gleichmäßigere Oberflächenanmutung zu erzeugen.

Zur Erhöhung der Korrosionsresistenz können das Trägermaterial und/oder die Lage des korrosionsresistenten Aluminiumwerkstoff auf der der Verbindung zwischen Trägermaterial und korrosionsresistentem Aluminiumwerkstoff abgewandten Seite eloxiert werden. Die Eloxierung kann dabei sowohl vor als auch nach dem Fügen bzw. Umformen der Verbundwerkstoffzuschnitte erfolgen. Das Verfahren kann somit sehr flexibel ausgestaltet werden.

Eine nächste Weiterbildung des erfindungsgemäßen Verfahrens sieht vor, einen Kraftstofftank für ein Nutzfahrzeug, insbesondere für einen Lastkraftwagen, herzustellen. Kraftstofftanks von Nutzfahrzeugen, insbesondere von Lastkraftwagen, müssen gegenüber Kraftstofftanks anderer Fahrzeuge üblicherweise über einen wesentlich längeren Zeitraum einem korrosiven Angriff standhalten. Die hohe Beständigkeit des erfindungsgemäßen Kraftstofftanks auch gegenüber Biodiesel kommt daher in diesen Fahrzeugen besonders zur Geltung.

Hinsichtlich weiterer Vorteile bzw. vorteilhafter Ausführungsformen des erfindungsgemäßen Verfahrens wird auf die Ausführungen zu dem erfindungsgemäßen Kraftstofftank aus Metall verwiesen.

Es gibt vielfältige Möglichkeiten, den erfindungsgemäßen Kraftstofftank bzw. das erfindungsgemäße Verfahren auszugestalten und weiterzubilden. Hierzu wird einerseits auf die den unabhängigen Patentansprüchen nachgeordneten abhängigen Patentansprüche und andererseits auf die Beschreibung eines Ausführungsbeispiels in Verbindung mit der Zeichnung verwiesen. In der Zeichnung zeigt:

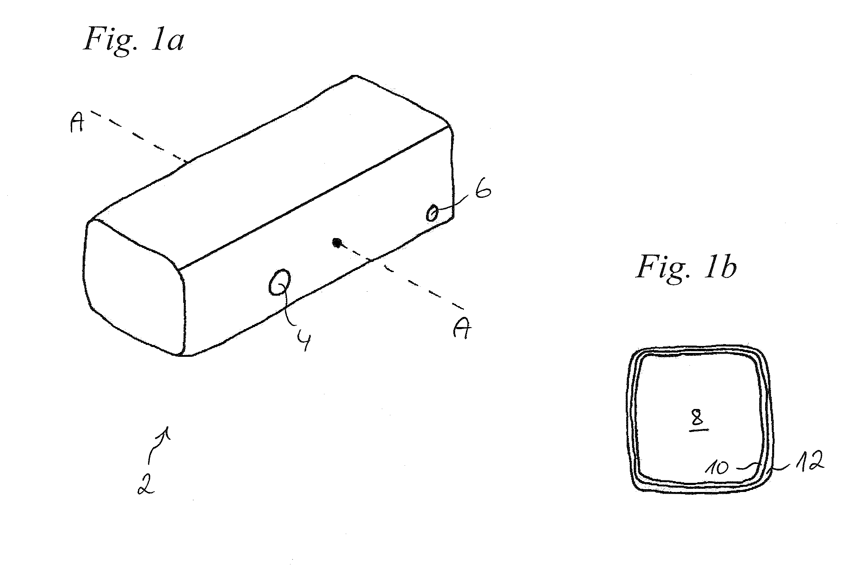

- Fig. 1a: ein schematisches Ausführungsbeispiel eines Kraftstofftanks in einer Außenansicht und
- Fig. 1b: eine Querschnittsansicht des Kraftstofftanks entlang der Schnittlinie A-A.

Fig. 1a zeigt in einer schematischen Darstellung einen Kraftstofftank 2, welcher in diesem Beispiel in etwa die Form eines Hohlquaders aufweist. Der beispielhaft gezeigte Kraftstofftank 2 ist insbesondere für den Einsatz in einem Lastkraftwagen geeignet. Der Kraftstofftank 2 weist eine Öffnung zur Ankopplung einer Füllvorrichtung 4 und eine Öffnung zur Ankopplung einer Anschlussleitung 6, mittels welcher der Kraftstoff dem Motor des Kraftfahrzeugs zugeführt werden kann, auf. Die Form des Kraftstofftanks 2 aus Fig. 1a ist lediglich beispielhaft gezeigt. Der Kraftstofftank 2 kann beispielsweise auch eine in etwa kugelförmige, zylindrische oder beliebige andere Form aufweisen.

Fig. 1b zeigt eine Querschnittsansicht des in der Fig. 1a dargestellten Kraftstofftanks 2 entlang der Linie A-A. Der Kraftstofftank 2 ist in diesem Beispiel aus einem zweilagigen Verbundwerkstoff ausgebildet, wobei die dem Kraftstoffaufnahmevolumen 8 zugewandte Lage 10 des Verbundwerkstoffs aus einem korrosionsresistenten Aluminiumwerkstoff, beispielsweise Reinaluminium des Typs Al99,5 oder eine Aluminiumlegierung des Typs AIMg1, ist. Die andere Lage 12 des Verbundwerkstoffs, welche in diesem Beispiel als Außenwand fungiert, ist aus einem Recyclingwerkstoff, vorzugsweise aus Recyclingaluminium, hergestellt. Es sind aber auch andere Materialien zur Bildung des Trägermaterials verwendbar. Durch den zweilagigen Aufbau weist der Kraftstofftank 2 gegenüber in dem Kraftstoffaufnahmevolumen 8 befindlichen Fluiden (nicht gezeigt), insbesondere Biodieseln, eine hohe Korrosionsresistenz auf. Der äußere Teil des Kraftstofftanks 2 kann hingegen aus einem kostengünstigen Material hergestellt sein. Die Darstellung in Fig. 1a ist nicht skaliert, was bedeutet, dass die Dickenverhältnisse der Lage 12 aus einem Recyclingwerkstoff und der Lage 10 aus dem korrosionsresistenten Aluminiumwerkstoff in Abweichung zu der in Fig. 1a gezeigten Form ausgebildet sein können. Aus Kostengründen ist es beispielsweise möglich, die Dicke der Lage 10 aus dem korrosionsresistenten Aluminiumwerkstoff auf ein Minimum zu beschränken und den Hauptanteil an Festigkeit und Stabilität des Kraftstofftanks 2 durch die Wahl der Dicke der Lage 12 des Recyclingwerkstoffs einzustellen.

Es ist natürlich ebenfalls möglich, beidseitig der Lage 12 aus einem Recyclingwerkstoff eine Lage aus einem korrosionsresistenten Aluminiumwerkstoff vorzusehen. Auf diese Weise kann insbesondere eine gleichmäßige Oberflächenanmutung und/oder eine verbesserte Optik des Kraftstofftanks 2 erreicht werden.

## Patentansprüche

1. Kraftstofftank (2) aus Metall mit einem Kraftstoffaufnahmevolumen (8), welcher aus einem wenigstens zweilagigen Verbundwerkstoff gebildet ist,
**dadurch gekennzeichnet, dass**
der Verbundwerkstoff ein leichtmetallbasiertes, insbesondere aluminiumbasiertes Trägermaterial (12) aufweist, welches auf wenigstens der dem Kraftstoffaufnahmevolumen (8) zugewandten Seite eine Lage eines korrosionsresistenten Aluminiumwerkstoffes (10) aufweist.

2. Kraftstofftank nach Anspruch 1,
**dadurch gekennzeichnet, dass**
das Trägermaterial (12) ein- oder beidseitig mit einer Lage eines korrosionsresistenten Aluminiumwerkstoffs plattiert, insbesondere walzplattiert oder walzschweißplattiert ist.

3. Kraftstofftank nach Anspruch 1,
**dadurch gekennzeichnet, dass**
der Verbundwerkstoff durch simultanes Gießen mit mindestens einer ein- oder beidseitig angeordneten Lage eines korrosionsresistenten Aluminiumwerkstoffes hergestellt ist.

4. Kraftstofftank nach einem der Ansprüche 1 bis 3,
**dadurch gekennzeichnet, dass**
der korrosionsresistente Aluminiumwerkstoff (10) gegenüber aus mit Methanol veresterten Pflanzenölen hergestellten Kraftstoffen, insbesondere Biodieseln, korrosionsbeständig ist.

5. Kraftstofftank nach einem der Ansprüche 1 bis 4,
**dadurch gekennzeichnet, dass**
der korrosionsresistente Aluminiumwerkstoff (10) ein Reinaluminium, vorzugsweise eine Aluminiumlegierung des Typs A199,5, oder eine AlMg1-Aluminiumlegierung ist.

6. Kraftstofftank nach einem der Ansprüche 1 bis 5,
**dadurch gekennzeichnet, dass**
das Trägermaterial (12) aus einem Recyclingwerkstoff, insbesondere Recyclingaluminium, gefertigt ist.

7. Kraftstofftank nach einem der Ansprüche 1 bis 6,
**dadurch gekennzeichnet, dass**
der Verbundwerkstoff einseitig oder beidseitig glatt gewalzt ist und/oder der Verbundwerkstoff einseitig oder beidseitig einer chemischen oder elektrolytischen Glänzung unterzogen ist.

8. Kraftstofftank nach einem der Ansprüche 1 bis 7,
**dadurch gekennzeichnet, dass**
das Trägermaterial (12) und/oder die Lage aus einem korrosionsresistenten Aluminiumwerkstoff (10) auf der der Verbindung zwischen Trägermaterial (12) und korrosionsresistentem Aluminiumwerkstoff (10) abgewandten Seite zumindest teilweise eloxiert sind.

9. Verfahren zur Herstellung eines ein Kraftstoffaufnahmevolumen (8) aufweisenden Kraftstofftanks (2) aus Metall, insbesondere nach einem der Ansprüche 1 bis 8, bei dem aus einem leichtmetallbasiertes, insbesondere aluminiumbasiertes, Trägermaterial und mindestens einer Lage eines korrosionsresistenten Aluminiumwerkstoffes ein wenigstens zweilagiger Verbundwerkstoff gebildet wird, bei welchem Bleche aus dem Verbundwerkstoff bereit gestellt werden, und bei welchem die Bleche aus dem Verbundwerkstoff zu dem Kraftstofftank (2) umgeformt und/oder umgeformte Blechteile des Verbundwerkstoffs zu dem Kraftstofftank (2) zusammengefügt werden, wobei eine Lage (10) aus dem korrosionsresistenten Aluminiumwerkstoff dem Kraftstoffaufnahmevolumen (8) zugewandt ist.

10. Verfahren nach Anspruch 9,
**dadurch gekennzeichnet, dass**
die Lage aus dem korrosionsresistenten Aluminiumwerkstoff und das Trägermaterial mittels Plattieren, insbesondere Walzplattieren oder Walzschweißplattieren, verbunden werden.

11. Verfahren nach Anspruch 9,
**dadurch gekennzeichnet, dass**
der Verbundwerkstoff durch simultanes Gießen des Trägermaterials mit mindestens einer Lage aus korrosionsresistentem Aluminiumwerkstoff hergestellt wird.

12. Verfahren nach einem der Ansprüche 9 bis 11,
**dadurch gekennzeichnet, dass**
das Trägermaterial beidseitig eine Lage eines korrosionsresistenten Aluminiumwerkstoffs versehen wird.

13. Verfahren nach einem der Ansprüche 9 bis 12,
**dadurch gekennzeichnet, dass**
der Verbundwerkstoff einseitig oder beidseitig glatt gewalzt und/oder der Verbundwerkstoff einseitig oder beidseitig einer chemischen oder elektrolytischen Glänzung unterzogen wird.

14. Verfahren nach einem der Ansprüche 9 bis 13,
**dadurch gekennzeichnet, dass**
das Trägermaterial und/oder der korrosionsresistente Aluminiumwerkstoff auf der der Verbindung zwischen Trägermaterial und korrosionsresistentem Aluminiumwerkstoff abgewandten Seite zumindest teilweise eloxiert werden.

15. Verfahren nach einem der Ansprüche 9 bis 14,
**dadurch gekennzeichnet, dass**
ein Kraftstofftank (2) für ein Nutzfahrzeug, insbesondere einen Lastkraftwagen, hergestellt wird.
